# EUROPEAN PATENT SPECIFICATION

(11) **EP 2 561 601 B1**
(45) Date of publication and mention of the grant of the patent: **21.10.2020**
(21) Application number: 11704486.7
(22) Date of filing: 28.01.2011
(51) Int. Cl.: H02K 7/18, H02K 11/00, H02K 7/116, H02K 9/19, H02K 1/20

(54) **HIGHLY INTEGRATED ENERGY CONVERSION SYSTEM FOR WIND, TIDAL OR HYDRO TURBINES**
HOCHINTEGRIERTES ENERGIEKONVERSIONSSYSTEM FÜR WIND- GEZEITEN- ODER WASSERKRAFTWERKE
SYSTÈME DE CONVERSION D'ÉNERGIE À HAUTE INTÉGRATION POUR TURBINES ÉOLIENNES, MARÉMOTRICES OU HYDRAULIQUES

(30) Priority: 19.04.2010 NL 1037896
(43) Date of publication of application: 27.02.2013
(73) Proprietor: Synervisie B.V., 7908 ET Hoogeveen (NL)
(72) Inventor: VERSTEEG, Willem Marinus, NL-7908 ET Hoogeveen (NL)
(74) Representative: Bartelds, Erik
(86) International application number: PCT/NL2011/050058
(87) International publication number: WO 2011/133024

(56) References cited:
- EP-A1- 1 677 005
- EP-A1- 2 148 089
- EP-A2- 1 863 162
- WO-A1-01/21956
- WO-A1-2005/075822
- WO-A1-2005/096473
- CN-A- 1 834 454
- US-A1- 2009 230 681

## Description

The invention relates to a system for converting rotational energy from a relatively slow moving rotary input shaft, in particular the shaft of a wind turbine, a tidal turbine or a hydro turbine, into electrical energy to be supplied to a grid, comprising: a support structure for supporting a main bearing for the input shaft, a generator coupled to the input shaft and arranged on the support structure, a transmission arranged between the input shaft and the generator for increasing rotational speed and reducing torque, and a power converter that is electrically coupled between the generator and the grid, and that is arranged on the support structure. Such an energy conversion system - also called a "drive train"- is known from CN 1834454 A.

Conventional wind turbines comprise a rotor that is mounted on top of a tower. The rotor usually has three blades mounted on a hub which is carried by a main shaft. This main rotor shaft is journalled in a bearing which is mounted on a support structure at the top of the tower. Also mounted on the support structure is a generator which converts the rotational energy of the main rotor shaft into electrical energy. Depending on the type of wind turbine a geared transmission may be arranged between the main rotor shaft and the generator. The electrical energy from the generator is passed down through the tower by suitable power cables, and is either fed to a power converter that is usually located at the base of the tower, or directly supplied to the grid. When a power converter is used the output from the generator is converted into a high voltage direct current (e.g. 1,000 V DC), which is eventually inverted into an alternating current (AC) that is fed into the grid. The so-called "back-to-back" converters serve to isolate the energy conversion system from the grid.

The room at the base of the tower where the power converter is located usually also houses a brake resistor and an auxiliary power supply. The brake resistor serves to temporarily dissipate the electrical energy from the generator when grid failure occurs while the rotor is still turning with its blades at such a pitch angle that they generate torque. The auxiliary power supply includes an uninterruptible power source (UPS) and serves to power the various internal functions of the wind turbine, like e.g. yaw and pitch control, turbine control, instrumentation, etc.

There are currently three main types of horizontal axis wind turbines (HAWTs). Conventional wind turbines include an off-the-shelf generator, which operates at relatively high speeds of around 1,500 rpm. Since the rotor shaft typically rotates at less than 30 rpm, this type of wind turbine requires a complex multi stage transmission. This transmission is heavy and costly, and includes a lot of moving parts, increasing the risk of failure and subsequent downtime. Another type of wind turbine is the direct drive turbine, which does not include any transmission. Instead, the generator is provided with a large number of poles to generate an alternating current directly from the slow movement of the input shaft. Here, the generator is heavy and costly. A third type of wind turbine is the so-called "hybrid" design, which combines the advantages of the other two types. It includes a smaller and less complex transmission than the conventional highly geared design, and a generator that is smaller and lighter than that of the direct drive design.

There is a desire to locate wind turbines in more remote areas, such as offshore, in deserts or in arctic environments. The operating conditions in these locations may be extremely harsh and reaching the wind turbines may require long and expensive travels. Therefore, it is of the utmost importance that wind turbines for use in these conditions have a high level of reliability and low maintenance requirements to reduce downtime as much as possible. The same considerations apply to many tidal and hydro turbines, as for instance used in offshore tidal power stations.

Prior art document US 2009/230681 A1 discloses a method for reducing mechanical oscillation in a wind power plant which comprises a plurality of rotor blades, a wind turbine drive train and a generator, wherein the rotor blades are rotatably connected to the generator by the wind turbine drive train. The method comprises the steps: mathematically modeling the dynamical response and/or transfer function of a group of rotatable parts of the wind power plant, the group of rotatable parts comprising at least the wind turbine drive train, and determining dynamical response and/or transfer function of the group; in operation of the wind power plant, determining a first parameter characteristic of the mechanical oscillation at a first location, controlling the operation of at least one rotatable part in response to the dynamical response and/or transfer function of the group and at least the first parameter. In effect, resonance induced mechanical wear is reduced which leads to an increased life time of the wind power plant.

Prior art document WO 2005/075822 A1 is aimed at providing a compact, easily serviceable wind turbine, which is also suitable for off-shore operation. To achieve this, in a wind turbine comprising a drive train that is operated by wind power, driving gear and a generator, the document discloses that the driving gear is integrated into said generator.

Prior art document WO 01/21956 A1 discloses a windmill for generating electric current with the aid of a generator which is driven by vanes. The rotor and the vanes are supported by a common bearing. According to the disclosure of this document, the stator is positioned in a closed chamber with an air seal between the rotating part and the stationary part of the generator.

And finally, the above-mentioned prior art document CN 1834454 A discloses a system according the preamble of claim 1 with a wind-force power generator adopting evaporation, circulation and cooling process. The wind-force power generator mainly includes the following several portions: wind wheel, low-speed shaft, gearbox, gearbox heat exchanger, high-speed shaft, control frequency converter, control frequency converter heat exchanger, power generator, power generator heat exchanger, cooling medium heat exchanger, cooling medium and circulation pump. It is characterized by that it also includes evaporation circulation cooling device. Besides, the disclosure of this document also provides the working principle of said wind-force power generator.

The invention has for its object to provide an improved energy conversion system for use in a wind turbine, a tidal turbine or a hydro turbine. According to the invention, this is achieved in a system of the type described in the preamble, in that the converter is structurally integrated with the generator, the transmission includes a lubricating and/or cooling system, and the power converter and the generator are each coupled to the transmission lubricating and/or cooling system for heat exchange.

By arranging the converter in the vicinity of the generator the architecture and structure of the system are simplified and all kinds of parasitic effects that might occur when using the converter to control dynamic loads on the system are avoided. And by further integrating the converter with the generator and transmission the number of parts is reduced, which leads to lower manufacturing and installation costs and a reduced failure rate, resulting in lower downtime and a longer lifetime of the wind turbine. Finally, since the power converter and generator are coupled to the transmission lubricating and/or cooling system for heat exchange, they may also be cooled by the transmission lubricant, thus obviating the need for a dedicated cooler and leading to an even higher level of functional and structural integration.

In accordance with an important aspect of the invention the generator comprises a stator which includes heat pipes connected to the transmission lubricating and/or cooling system.

Each heat pipe preferably includes a supply line and a return line, one end of the heat pipe being mounted on fixed structure of the generator and connected to the transmission lubricating and/or cooling system. By providing the connection between the heat pipes and the lubricating and/or cooling system in the fixed structure, sealing is simplified and leakage is prevented.

Preferably the stator is removably mounted on free ends of the heat pipes. In this way maintenance is made easier.

In a further preferred embodiment of the energy conversion system the stator of the generator is arranged such as to introduce a predetermined amount of inductance and/or damping. In this way there is no need for separate filters and/or coils for the converter, thus further reducing the parts count.

Such a predetermined amount of inductance and/or damping may be generated when the stator has a core comprising laminated plates and a solid edge portion.

The generator may be an induction generator. This type of generator is very reliable and relatively inexpensive. Moreover, an induction generator allows generator slip and a certain amount of overload, which are useful properties in a wind turbine.

For improved ease of maintenance the generator preferably comprises a cage type rotor that is removably arranged.

The energy conversion system according to the invention may further preferably comprise a brake resistor that is electrically coupled to the generator and arranged on the support structure. This leads to an even higher degree of functional and structural integration.

The brake resistor may be operatively coupled to the transmission lubricating and/or cooling system, so that it may serve to preheat the lubricant when ambient temperatures are low or when additional heat is required.

The brake resistor may further advantageously be arranged to stabilize a DC output link connecting the power converter to an inverter supplying the grid. In this way the rotor may serve as an uninterruptible power source (UPS) to maintain the DC output link, even when the grid is off line.

In order to take full advantage of the rotor serving as UPS the energy conversion system may further include an auxiliary power supply that is electrically coupled to the generator and arranged on the support structure.

In a preferred embodiment the energy conversion system comprises a heat exchanger coupled to the transmission lubricating and/or cooling system. In this way a single heat exchanger may be used to maintain all fluids in the system at a suitable operating temperature.

In order to protect the important parts of the system from the environment, the generator, the transmission, the brake resistor and/or the auxiliary power supply are preferably all arranged in a sealed housing on the support structure. In this way the system can be used in harsh environments. The energy conversion system may further include a nacelle surrounding the sealed housing and support structure to provide an aerodynamically efficient exterior.

When the energy conversion system is used in a wind turbine, the support structure may be mounted on a tower.

In that case, the heat exchanger may advantageously comprise a reservoir filled with a liquid and arranged near the top of the tower to damp oscillating motions of the tower. The liquid may be a heat exchange fluid or it may be a lubricant and/or coolant circulating in the transmission lubricating and/or cooling system. In this way an even higher degree of functional and structural integration is achieved.

The invention will now be illustrated by means of some exemplary embodiments thereof, with reference being made to the annexed drawings, in which:
Fig. 1 is a pictorial view of a wind turbine including the energy conversion system of the invention,
Fig. 2 is a longitudinal sectional view of a first embodiment of the energy conversion system of the invention, including a generator having an inner rotor and outer stator,
Fig. 3 is a view corresponding with fig. 2 and showing an alternative embodiment in which the position of the rotor and stator have been inverted,
Fig. 4 is a rear view of the stator of fig. 2,
Fig. 5 shows a detail of the stator of fig. 2, and
Fig. 6 shows a block diagram of the various functional elements of the energy conversion system according to the invention.

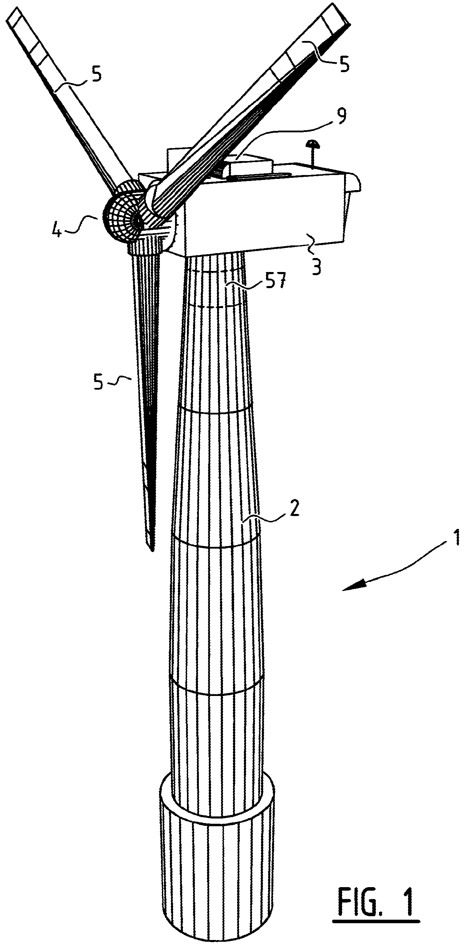

A wind turbine 1 includes a tower 2 carrying a support structure that is enclosed in a nacelle 3 (Fig. 1). The support structure carries a main bearing in which a main shaft 21 is journalled. This shaft 21 carries a hub 4, which in turn carries three rotor blades 5. Also located within the nacelle 3 is an energy conversion system in accordance with the present invention.

In the illustrated embodiment the energy conversion system 20 is a so-called "hybrid" design, including a relatively small and simple transmission 7 and a relatively small and lightweight generator 6. In accordance with a further aspect of the invention there is a high level of integration between the generator 6 and transmission 7. In this case the energy conversion system 20 comprises a planetary input stage with a highly integrated generator/converter and cooling concept; the high level of integration being an important part of the claimed invention as will be discussed below.

A planet carrier 22 of the planetary input stage or transmission 7 of the energy conversion system 20 is connected to the low speed main shaft 21. The housing 8 is sealed around the planet carrier 22 by an annular seal 42. The planet carrier 22 is journalled in a bearing 43 and in a bearing 10 in a cast wall 35 separating the transmission 7 from the generator 6. It carries a plurality of planets 23, each of which is journalled in a bearing 11 and is rotatable about a shaft 12. A ring gear 24 of the transmission 7 is fixed whilst a sun 25 is rotating and connected to rotor support structure 28 of the generator 6 via a shaft 26. The shaft 26 is journalled in a bearing 13 in a block 14 mounted on the wall 35. The ring gear 24 is integral part of the sealed enclosure 8.

The transmission 7 can comprise a single planetary stage, a planetary stage with compound gears or any other configuration. In case of multiple gear stages the sun 25 could be connected to a next stage, rather than to the generator. The energy conversion system 20 of the invention is not limited to a certain input configuration. For reasons of simplicity and reliability a single planetary input stage is preferred up to power ratings of 2MW; however, for higher power ratings the input stage may deviate from the described configuration The main purpose of the transmission 7 is to increase the rotational speed of the generator 6 and consequently reduce the torque and the dimensions of the generator 6. The gears 23, 24, 25 and their associated bearings 10, 11, 13, 43 are pressure lubricated. To this end a closed lubrication and/or cooling system is provided. This lubrication and/or cooling system comprises filtration and pump units and includes electrical heating elements 44 to be discussed later and a heat exchanger 9.

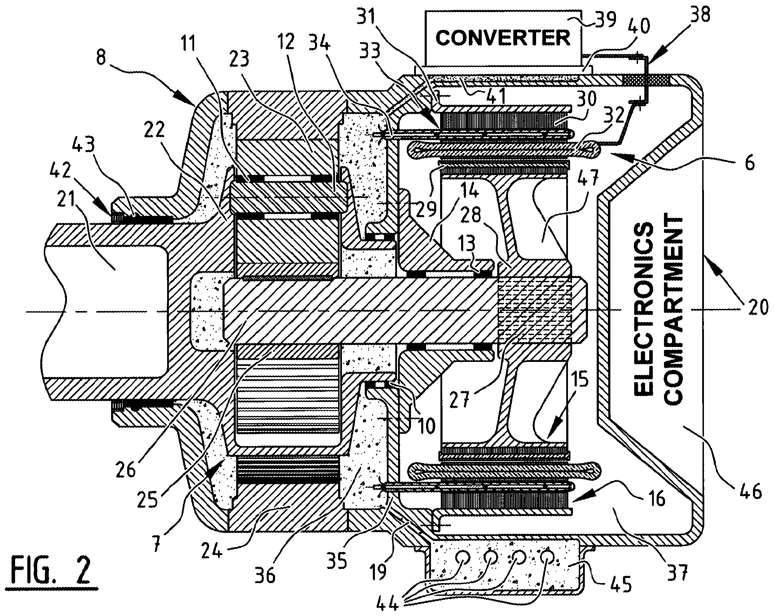

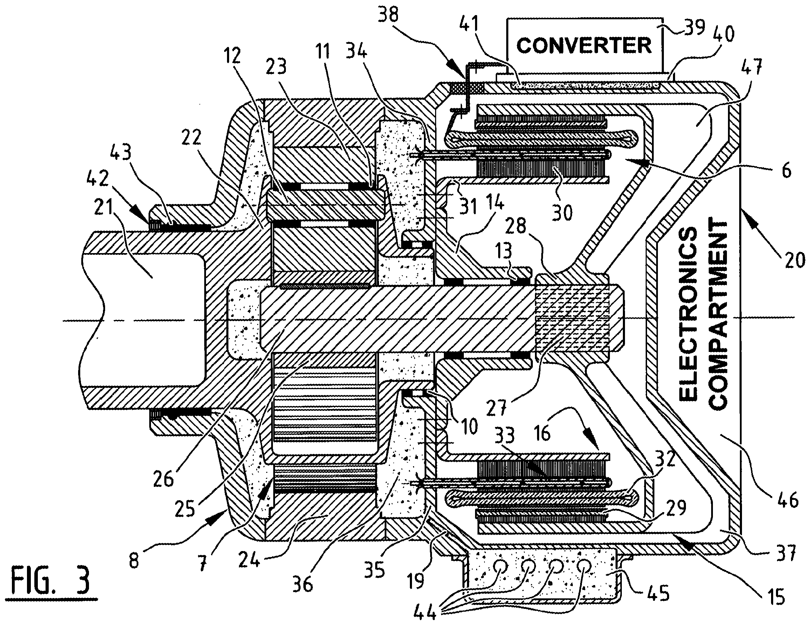

In Fig. 2 the energy conversion system is configured with an inner rotor 15 and outer stator 16. However, the energy conversion system is designed to accept both inner and outer rotors and Fig. 3 shows an alternative configuration with an outer rotor 15 and inner stator 16. For serviceability and manufacturability a radial flux direction is chosen to enable easy assembly and disassembly of the rotor 15 and stator 16.

The energy conversion system 20 of the invention enables high power densities in a relative compact enclosure 8; therefore an inventive method is applied to cool down the active materials of the generator 6.

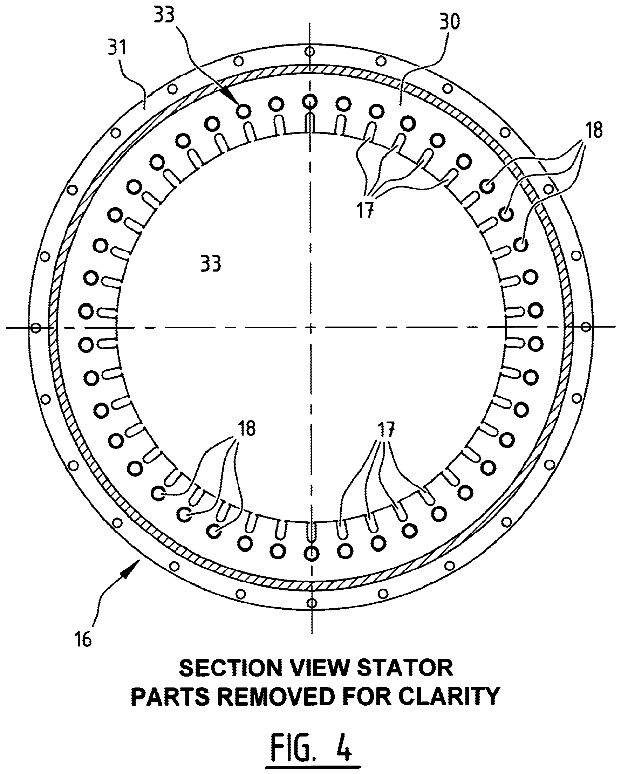

In the illustrated embodiment the stator 16 comprises a core of laminated plates 30 arranged between end plates and mounted to a support ring 31. The stator 16 further comprises a plurality of circumferential slots 17 and stator windings 32 which are evenly distributed in circumferential direction. Each stator plate 30 comprises slots 17 and holes 18 punched in such a way that after stacking and assembly of the stator plates 30 all slots 17 and holes 18 are aligned in axial direction. The holes 18, which serve to accommodate a cooling assembly, are located radially outwardly of the slots 17 and close to the bottoms thereof (Fig. 4); this location is chosen to minimize blocking of the flux path.

During the stacking process ceramic tubes 33 are inserted in the holes 18 to accommodate a heat pipe assembly 34 in the final assembly of the energy conversion system 20. The length of the ceramic tubes 33 is substantially equal to the thickness of the stacked laminates 30 including the end plates. During the baking and curing process of the laminates 30, of which the ceramic tubing 33 is part, the tubes 33 are bonded and solidified with the laminates. Ceramic material is chosen for its excellent electrical insulation properties, low thermal resistance and high thermal stability. During production and for the purpose of heating up and curing the laminates 30 heat will be applied from the outside as well as through the ceramic tubing 33 (by means of heat pipes). This process is suitable for any shape of tubing; for example round or rectangular tubes can be inserted in the laminates 30 as well as in the slot section. Therefore, the stator 16 is specially suited for but not limited to random (round) wiring, form-wound wiring, lap windings and wave windings in slotted machines, low-medium- or high-voltage windings and is not limited to wind generators only.

After production of the stator 16, comprising a laminated baked and cured stator core 30, ceramic tubing 33, circumferential spaced windings 32, impregnation and finishing coating, the stator is ready to be mounted in the generator 6 of the energy conversion system 20. Inside the sealed enclosure 8 a circumferentially and evenly spaced array of heat pipes 34 is mounted in the cast wall 35 separating the gear section 36 from the generator section 37. The heat pipes 34 are mounted in axial direction and are aligned with the ceramic tubes 33 inside the stator laminates 30; each hole 18 houses one ceramic tube 33 to receive one heat pipe assembly 34.

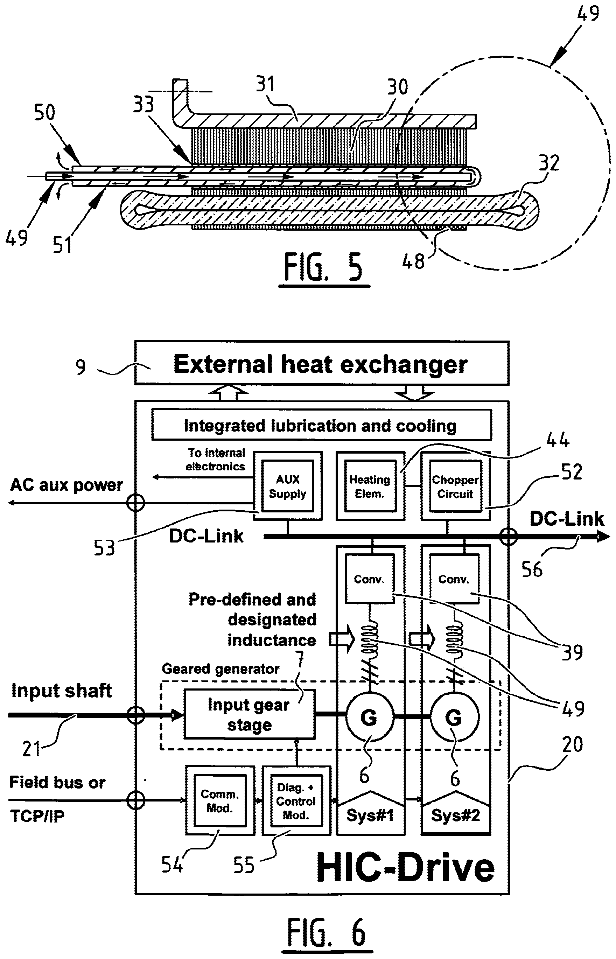

Each heat pipe assembly 34 comprises a supply line and a return line. The supply line is formed by an inner tube 49, while the return line is formed by an annular space between the inner tube 49 and a metal outer tube 50 (Fig. 5). The outer tube 50 is closed at the free end sticking out of the stator 16 and opposite of the cast wall 35. Specially shaped spacers 51 are arranged between the inner and outer tubes 49, 50. The return line of each heat pipe 34 ends in the wet compartment 36 of the gear section (low pressure side). The inner tubes 49 of the heat pipe assembly 34 are connected through a restriction or orifice plate and a central valve to the pressurized and filtered side of the lubrication and/or cooling system of the transmission 7 (not shown in the drawings). Gear oil acting as lubricant and coolant flows through the inner tube 49 to the closed end of the heat pipe 34 where the flow reverses and consequently causes the oil the flow back along the outer tube 50 in the direction of the transmission 7 where it ends in the wet compartment 36. The specially shaped spacers 51 are designed to change the laminar boundary layers along the inner and outer tubes 49, 50 to enable the gear oil to pick up the maximum amount of dissipated energy. In this way the lubrication and/or cooling system of the transmission 7 also serves to control the temperature of the generator 6.

The heat pipes 34 are fixedly mounted to the wall 35 at one side and have free ends pointing in axial direction into the generator compartment 37. The prefabricated stator 16 is mounted in the sealed enclosure 8 by sliding the ceramic tubing 33 over the fixed heat pipes 34. The stator 16 is connected to electrical receptacles 38 of a power converter 39 that will be further described below.

The appropriate winding configuration and applied wiring type of the stator strongly depends on the final application, power rating and chosen voltage level of a DC output link 56 which serves to connect the wind turbine to the utility grid. In actual practice at least one three-phase system will be used, and in the illustrated embodiment of Fig. 6 two three-phase systems are shown. The energy conversion system of the invention does not exclude a plurality of three-phase systems and/or segmented stator configurations; however the preferred configuration is a non-segmented stator 16 with at least one three-phase system and a plurality of evenly distributed circumferential slots 17 and stator windings 32.

As shown in Fig. 2 for an inner rotor and in Fig. 3 for an outer rotor, the rotor 15 of the present energy conversion system 20 comprises a radial lightweight support structure 28 mounted on the shaft 26. This support structure 28 carries either slotted laminated plates (or solid structure) with conductive bars 29 - in case of an induction machine - or laminates (or solid structure) with permanent magnets - in case of a synchronous machine. The rotor 15 having a cage of conductive bars 29 is currently the preferred configuration. During manufacturing or when field service is required the rotor 15 can be inserted or removed through a lockable sliding member or spline section 27. Other than air cooling with fins 47 and/or heat conducting channels embedded in the laminates no special measures are taken for rotor cooling. The energy conversion system concept of the invention accepts excitation through induction or permanent magnets. The generator 6 is a multipole machine with a plurality of bars 29 or magnets circumferentially place with a skew or V-shape and evenly distributed; the rotor 15 with cage bars is the preferred topology.

An important aspect of the invention is the arrangement of the converter 39 on the support structure on top of the tower 2. In the illustrated embodiment the converter 39, which may be a multi-level Pulse Width Modulation (PWM) based converter, is structurally integrated with the generator 6. The illustrated converter 39 is a full four-quadrant converter able to drive (motor quadrants) or load (generator quadrants) the generator 6 of the energy conversion system. The converter 39 is located at the outside of the sealed enclosure 8 adjacent to the generator section 37 but still electrically connected to and physically mounted on the energy conversion system 20, so that it forms an integral part thereof. The converter 39 includes a heat sink 40 which is directly connected to a machined area of the enclosure 8. Underneath this area and embedded in the casting of the enclosure 8, a labyrinth or meander shape oil channel 41 is present and connected to the pressurized side of the lubrication and/or cooling system of the transmission 7. The other end of the oil channel 41 is connected to the low pressure side or wet compartment 36. In this way the transmission lubrication and/or cooling system also serves to control the temperature of the converter 39. As with the stator 16 no gear oil will flow through the actual converter compartment; the system is closed and the presence of oil is limited to the wet compartment 36 of the transmission 7 only.

The gear oil circulating in the transmission lubrication and/or cooling system is cooled in an external heat exchanger 9. In the illustrated embodiment this heat exchanger 9 is arranged on top of the nacelle 3. Alternatively, the heat exchanger 9 could be formed by a reservoir 57 (illustrated in dashed lines in Fig. 1) filled with a liquid and arranged in the tower 2 near its top. This reservoir 57, which could be annular to provide a large surface exposed to the ambient atmosphere, could then also serve as a damper to damp oscillatory motions of the tower 2.

By arranging the converter 39 of the energy conversion system 20 according to the invention on the support structure on top of the tower 2, it is located as close as possible to the receptacles 38 of the stator 16. In this way parasitic or other undesirable impedances introduced by long interconnections are avoided. In conventional drive trains having a remote power converter, reactor coils are incorporated between the generator and the input converter to provide damping. For proper operation of the present combination of the generator 6 and converter 39 a certain pre-defined amount of inductance and damping is required. To that end the stator 16 contains a pre-defined and designated area 49 to introduce the required inductance and damping. In the illustrated embodiment this is realized by providing the laminated core stator 16 with a solid edge portion 48. It should be noted that although the schematic drawing of Fig. 6 shows coils between the generators 6 and the converters 39, these are only intended to symbolize inductance and damping provided by the specific arrangement of the stator 6 shown in Fig. 5.

The converter 39 is provided with a converter control system which uses sensorless algorithms to determine the position of the rotor 15 and the torque. The relative low inertia of the rotor 15 in combination with the converter control algorithms keeps the torque within a tight range and ultimately will extend the lifetime of the gears.

From the aforementioned descriptions and embodiments it is clear that separation of one or more functions will obliterate the inventive Energy conversion system's prime embodiment namely: the high level of integration, reduction of parts and consequently a higher reliability including the ability to operate under extreme conditions and in harsh environments. The combined and integrated functionality such as the sealed enclosure, closed and multi-functional lubrication annex cooling system, the removable cage type rotor construction, the removable stator construction, including cooling concept, additional inductance and damping and the converter are the preferred embodiments of the inventive energy conversion system.

Another aspect of the invention is the provision of heating elements 44 having a combined functionality. In case of cold starts or when additional heating is required the primary function of the heating elements 44 is to heat up the gear oil of the transmission lubrication and/or cooling system. This oil flows through a compartment 45 that is connected to the wet compartment 36 of the transmission 7 by a channel 19. The heating elements 44 serve to raise the oil temperature to within a desired temperature range. The other function of the heating elements 44 is to serve as brake resistors and to dissipate excessive energy into the oil as a result of emergency stops, ride thru situations or other conditions where it is required to dump energy. The duration of the energy dump is determined by the allowable heat rise of the oil and the cooling capacity of a cooling unit of the energy conversion system. Depending on the application, the mechanical input power of the energy conversion system as well as the rotational speed can be regulated and therefore the energy dump is only required for several seconds to stabilize the system. In case of the preferred configuration of the energy conversion system, including an induction generator 6 and cage rotor 15, the rotor can take up energy as well. Once the application (e.g. wind turbine, tidal turbine) has been stabilized but still disconnected from the grid, the heating elements 44 can be used to create a bias current to keep the DC link 56 stable. In all cases where the use of the heating elements 44 is required, the heating elements 44 are fed through a chopper circuit 52 directly connected to the DC link 56.

The energy conversion system 20, which also includes an auxiliary power supply 53, can maintain this situation as long as the required mechanical input power is available. In the situation where the turbine including the energy conversion system 20 is still disconnected from the grid and the mechanical input conditions drop below the required minimum power rating, the system 20 is no longer able to maintain the DC link 56 and its own power consumption through the auxiliary power supply 53. When this occurs the energy conversion system 20 will bring itself into a hibernating state using the remaining rotating inertia as energy buffer to shut down; consequently and after reaching the hibernating state the energy conversion system 20 has ceased operation. When the DC link 56 is present or present again (after a grid restoration) a control module 55 which controls operation of the energy conversion system 20 will start up and be ready to accept commands from a governing control system.

In the illustrated embodiment the auxiliary power supply is formed by an integrated inverter 53 which is also arranged on the support structure on top of the tower 2. The auxiliary power supply 53 serves to supply the internal and external equipment with AC power. In the case of a wind turbine the external equipment comprises a yaw system, pitch system, turbine control, instrumentation and lighting inside the turbine. The internal equipment comprises the control and diagnostics module 55, converter and inverter control, communication module 54 and chopper module 52. All the electronic equipment, except the power converter 39, is located in the electronics compartment 46 integrated in the sealed enclosure 8 of the energy conversion system 20.

The control module 55 controls all the internal functions as de-scribed in this application. Through the communication module 54 the control module 55 communicates the status of the energy conversion system 20 and accepts commands from an external and governing system. Commands like power demands and acknowledgements and other controls and handshake functions related to the DC link 56 will be handled by the control module 55. Based on the available power at the input shaft 21 of the energy conversion system 20 and the power demand made known by the governing system the control module 55 handles all internal operations autonomously.

From the aforementioned description of some embodiments it is clear that the invention provides an energy conversion system having a high level of integration, resulting in a reduction of the number of parts and consequently a higher reliability including the ability to operate under extreme conditions and in harsh environments. Although the invention has been illustrated by reference to some exemplary embodiments, it will be clear that it is not limited to such embodiments, but could be modified and adapted in many ways. The scope of the invention is solely determined by the following claims.

## Claims

1. System (20) for converting rotational energy from a relatively slow moving rotary input shaft (21), in particular the shaft of a wind turbine (1), tidal turbine or hydro turbine, into electrical energy to be supplied to a grid, comprising:
a support structure for supporting a main bearing for the input shaft (21);
a generator (6) coupled to the input shaft (21) and arranged on the support structure;
a transmission (7) arranged between the input shaft (21) and the generator (6) for increasing rotational speed and reducing torque; and
a power converter (39) that is electrically coupled between the generator (16) and the grid, and that is arranged on the support structure;
**characterized in that:**
- the converter (39) is structurally integrated with the generator (6);
- the transmission (7) includes a lubricating and cooling system; and
- the power converter (39) and the generator (6) are each coupled to the transmission lubricating and cooling system for heat exchange.

2. Energy conversion system (20) according to claim 1, **characterized in that** the generator (6) comprises a stator (16) which includes heat pipes (34) connected to the transmission lubricating and cooling system.

3. Energy conversion system (20) according to claim 2, **characterized in that** each heat pipe (34) includes a supply line and a return line, one end of the heat pipe (34) being mounted on fixed structure (35) of the generator (6) and connected to the transmission lubricating and cooling system.

4. Energy conversion system (20) according to claim 2 or 3, **characterized in that** the stator (16) is removably mounted on free ends of the heat pipes (34).

5. Energy conversion system (20) according to any one of claims 2-4, **characterized in that** the stator (16) is arranged such as to introduce a predetermined amount of inductance and/or damping, wherein preferably the stator (16) has a core comprising laminated plates (30) and a solid edge portion (48).

6. Energy conversion system (20) according to any one of the preceding claims, **characterized in that** the generator (6) is an induction generator and preferably comprises a cage type rotor (15) that is removably arranged.

7. Energy conversion system (20) according to any one of the preceding claims, **characterized by** a brake resistor that is electrically coupled to the generator (6) and arranged on the support structure.

8. Energy conversion system (20) according to claim 7, **characterized in that** the brake resistor is operatively coupled to the transmission lubricating and cooling system.

9. Energy conversion system (20) according to claim 7 or 8, **characterized in that** the brake resistor is arranged to stabilize a DC output link (56) connecting the power converter (39) to an inverter supplying the grid.

10. Energy conversion system (20) according to any one of the preceding claims, **characterized by** an auxiliary power supply (53) that is electrically coupled to the generator (6) and arranged on the support structure.

11. Energy conversion system (20) according to any one of the preceding claims, **characterized by** a heat exchanger (9) coupled to the transmission lubricating and cooling system.

12. Energy conversion system (20) according to any one of the preceding claims, **characterized in that** the generator (6), the transmission (7), the brake resistor and/or the auxiliary power supply (53) are arranged in a sealed housing (8) on the support structure, and wherein preferably a nacelle (3) surrounds the sealed housing (8) and support structure.

13. Energy conversion system (20) according to any one of the preceding claims, **characterized in that** the support structure is mounted on a tower (2).

14. Energy conversion system (20) according to claims 11 and 13, **characterized in that** the heat exchanger (9) comprises a reservoir (57) filled with a liquid and arranged near the top of the tower (3) to damp oscillating motions of the tower (3).

15. Energy conversion system (20) according to any one of the preceding claims, **characterized in that** the power converter (39) is a full four-quadrant converter able to drive (motor quadrants) or load (generator quadrants) the generator (6).

## Patentansprüche

1. System (20) zur Umwandlung von Rotationsenergie von einer sich relativ langsam bewegenden Dreheingangswelle (21), insbesondere der Welle einer Windturbine (1), Gezeitenturbine oder Wasserturbine in elektrische Energie, die an ein Netz geliefert werden soll, das aufweist:
eine Haltestruktur zum Halten eines Hauptlagers für die Eingangswelle (21);
einen Generator (6), der mit der Eingangswelle (21) gekoppelt ist und auf der Haltestruktur angeordnet ist;
ein Getriebe (7), das zwischen der Eingangswelle (21) und dem Generator (6) angeordnet ist, um die Drehzahl zu erhöhen und das Drehmoment zu verringern; und
einen Leistungswandler (39), der elektrisch zwischen den Generator (16) und das Netz gekoppelt ist und der auf der Haltestruktur angeordnet ist;
**dadurch gekennzeichnet, dass**:
- der Wandler (39) mit dem Generator (6) baulich integriert ist;
- das Getriebe (7) ein Schmierungs- und Kühlungssystem umfasst; und
- der Leistungswandler (39) und der Generator (6) jeweils für den Wärmeaustausch mit dem Getriebeschmierungs- und Kühlungssystem gekoppelt sind.

2. Energieumwandlungssystem (20) nach Anspruch 1, **dadurch gekennzeichnet, dass** der Generator (6) einen Stator (16) aufweist, der Wärmerohrleitungen (34) umfasst, die mit dem Getriebeschmierungs- und Kühlungssystem verbunden sind.

3. Energieumwandlungssystem (20) nach Anspruch 2, **dadurch gekennzeichnet, dass** jede Wärmerohrleitung (34) eine Versorgungsleitung und eine Rückführungsleitung umfasst, wobei ein Ende der Wärmerohrleitung (34) auf einer festen Struktur (35) des Generators (6) montiert ist und mit dem Getriebeschmierungs- und Kühlungssystem verbunden ist.

4. Energieumwandlungssystem (20) nach Anspruch 2 oder 3, **dadurch gekennzeichnet, dass** der Stator (16) entfernbar auf freien Enden der Wärmerohrleitungen (34) montiert ist.

5. Energieumwandlungssystem (20) nach einem der Ansprüche 2 - 4, **dadurch gekennzeichnet, dass** der Stator (16) derart angeordnet ist, dass eine vorgegebene Induktanz- und/oder Dämpfungsgröße eingeführt wird, wobei der Stator (16) bevorzugt einen Kern hat, der laminierte Platten (30) und einen massiven Randabschnitt (48) aufweist.

6. Energieumwandlungssystem (20) nach einem der vorhergehenden Ansprüche, **dadurch gekennzeichnet, dass** der Generator (6) ein Induktionsgenerator ist und vorzugsweise einen Käfigläufer (15) aufweist, der entfernbar angeordnet ist.

7. Energieumwandlungssystem (20) nach einem der vorhergehenden Ansprüche, **gekennzeichnet durch** einen Bremswiderstand, der mit dem Generator (6) elektrisch gekoppelt ist und auf der Haltestruktur angeordnet ist.

8. Energieumwandlungssystem (20) nach Anspruch 7, **dadurch gekennzeichnet, dass** der Bremswiderstand betriebsfähig mit dem Getriebeschmierungs- und Kühlungssystem gekoppelt ist.

9. Energieumwandlungssystem (20) nach Anspruch 7 oder 8, **dadurch gekennzeichnet, dass** der Bremswiderstand angeordnet ist, um eine Gleichstromausgangsverbindung (56) zu stabilisieren, welche den Leistungswandler (39) mit einem Inverter verbindet, der das Netz versorgt.

10. Energieumwandlungssystem (20) nach einem der vorhergehenden Ansprüche, **gekennzeichnet durch** eine Hilfsleistungsversorgung (53), die mit dem Generator (6) elektrisch gekoppelt ist und auf der Haltestruktur angeordnet ist.

11. Energieumwandlungssystem (20) nach einem der vorhergehenden Ansprüche, **gekennzeichnet durch** einen Wärmetauscher (9), der mit dem Getriebeschmierungs- und Kühlungssystem gekoppelt ist.

12. Energieumwandlungssystem (20) nach einem der vorhergehenden Ansprüche, **dadurch gekennzeichnet, dass** der Generator (6), das Getriebe (7), der Bremswiderstand und/oder die Hilfsleistungsversorgung (53) in einem abgedichteten Gehäuse (8) auf der Haltestruktur angeordnet sind, und wobei das abgedichtete Gehäuse (8) und die Haltestruktur bevorzugt von einer Gondel (3) umgeben sind.

13. Energieumwandlungssystem (20) nach einem der vorhergehenden Ansprüche, **dadurch gekennzeichnet, dass** die Haltestruktur auf einem Mast (2) montiert ist.

14. Energieumwandlungssystem (20) nach den Ansprüchen 11 und 13, **dadurch gekennzeichnet, dass** der Wärmetauscher (9) einen Vorratsbehälter (57) aufweist, der mit Flüssigkeit gefüllt ist und nahe der Oberseite des Masts (3) angeordnet ist, um Schwingungsbewegungen des Masts (3) zu dämpfen.

15. Energieumwandlungssystem (20) nach einem der vorhergehenden Ansprüche, **dadurch gekennzeichnet, dass** der Leistungswandler (39) ein vollständiger Vierquadrantensteller ist, der fähig ist, (Motorquadranten) oder die Last (Generatorquadranten) des Generators (6) anzutreiben.

## Revendications

1. Système (20) pour convertir de l'énergie rotative provenant d'un arbre d'entrée rotatif à déplacement relativement lent (21), en particulier l'arbre d'une turbine éolienne (1), turbine marémotrice ou turbine hydraulique, en énergie électrique à apporter à un réseau, comprenant :
une structure de support pour supporter un palier principal pour l'arbre d'entrée (21) ;
un générateur (6) couplé à l'arbre d'entrée (21) et agencé sur la structure de support ;
une transmission (7) agencée entre l'arbre d'entrée (21) et le générateur (6) pour augmenter la vitesse de rotation et réduire le couple ; et
un convertisseur de puissance (39) qui est électriquement couplé entre le générateur (16) et le réseau, et qui est agencé sur la structure de support ;
**caractérisé en ce que :**
- le convertisseur (39) est structurellement intégré au générateur (6) ;
- la transmission (7) inclut un système de lubrification et de refroidissement ; et
- le convertisseur de puissance (39) et le générateur (6) sont chacun couplés au système de lubrification et de refroidissement pour un échange de chaleur.

2. Système de conversion d'énergie (20) selon la revendication 1, **caractérisé en ce que** le générateur (6) comprend un stator (16) qui inclut des caloducs (34) reliés au système de lubrification et de refroidissement de la transmission.

3. Système de conversion d'énergie (20) selon la revendication 2, **caractérisé en ce que** chaque caloduc (34) inclut une conduite d'alimentation et une conduite de retour, une extrémité du caloduc (34) étant montée sur une structure fixe (35) du générateur (6) et reliée au système de lubrification et de refroidissement de la transmission.

4. Système de conversion d'énergie (20) selon la revendication 2 ou 3, **caractérisé en ce que** le stator (16) est monté de manière amovible sur des extrémités libres des caloducs (34).

5. Système de conversion d'énergie (20) selon l'une quelconque des revendications 2 à 4, **caractérisé en ce que** le stator (16) est agencé de manière à introduire une quantité prédéterminée d'inductance et/ou d'amortissement, dans lequel de préférence le stator (16) comporte un noyau comprenant des plaques stratifiées (30) et une partie bord solide (48).

6. Système de conversion d'énergie (20) selon l'une quelconque des revendications précédentes, **caractérisé en ce que** le générateur (6) est un générateur d'induction et comprend de préférence un rotor de type à cage (15) qui est agencé de manière amovible.

7. Système de conversion d'énergie (20) selon l'une quelconque des revendications précédentes, **caractérisé par** une résistance de freinage qui est électriquement couplée au générateur (6) et agencée sur la structure de support.

8. Système de conversion d'énergie (20) selon la revendication 7, **caractérisé en ce que** la résistance de freinage est fonctionnellement couplée au système de lubrification et de refroidissement de la transmission.

9. Système de conversion d'énergie (20) selon la revendication 7 ou 8, **caractérisé en ce que** la résistance de freinage est agencée pour stabiliser une liaison de sortie CC (56) reliant le convertisseur de puissance (39) à un onduleur alimentant le réseau.

10. Système de conversion d'énergie (20) selon l'une quelconque des revendications précédentes, **caractérisé par** une alimentation auxiliaire (53) qui est électriquement couplée au générateur (6) et agencée sur la structure de support.

11. Système de conversion d'énergie (20) selon l'une quelconque des revendications précédentes, **caractérisé par** un échangeur de chaleur (9) couplé au système de lubrification et de refroidissement de la transmission.

12. Système de conversion d'énergie (20) selon l'une quelconque des revendications précédentes, **caractérisé en ce que** le générateur (6), la transmission (7), la résistance de freinage et/ou l'alimentation auxiliaire (53) sont agencés dans un boîtier étanche (8) sur la structure de support, et dans lequel de préférence une nacelle (3) entoure le boîtier étanche (8) et la structure de support.

13. Système de conversion d'énergie (20) selon l'une quelconque des revendications précédentes, **caractérisé en ce que** la structure de support est montée sur une tour (2).

14. Système de conversion d'énergie (20) selon les revendications 11 et 13, **caractérisé en ce que** l'échangeur de chaleur (9) comprend un réservoir (57) rempli d'un liquide et agencé près du haut de la tour (3) pour amortir les mouvements oscillants de la tour (3).

15. Système de conversion d'énergie (20) selon l'une quelconque des revendications précédentes, **caractérisé en ce que** le convertisseur de puissance (39) est un convertisseur à quatre quadrants pleins capable d'entraîner (quadrants de moteur) ou de charger (quadrants de générateur) le générateur (6).
